# EUROPÄISCHE PATENTSCHRIFT

(11) **EP 1 873 322 B1**
(45) Veröffentlichungstag und Bekanntmachung des Hinweises auf die Patenterteilung: **14.05.2014**
(21) Anmeldenummer: 07110992.0
(22) Anmeldetag: 25.06.2007
(51) Int. Cl.: E04D 13/00, G01N 27/20, G01M 3/16

(54) **Verfahren und Messsystem zur Kontrolle des Feuchteaufnahme- und Feuchteabgabeverhaltens von Bauwerkselementen**
Method and measuring system for checking the humidity absorption and emission behaviour of construction elements
Procédé et système de mesure destinés au contrôle du comportement d'absorption et de rejet d'humidité d'éléments de construction

(30) Priorität: 28.06.2006 DE 102006029746; 12.01.2007 DE 102007002613
(43) Veröffentlichungstag der Anmeldung: 02.01.2008
(73) Patentinhaber: Neu, Christoph, 10961 Berlin (DE); Altmann, Walter, 85414 Kirchdorf (DE)
(72) Erfinder: Neu, Werner, München (DE); Altmann, Walter, 85414 Kirchdorf (DE)
(74) Vertreter: Schlief, Thomas P.

(56) Entgegenhaltungen:
- DE-A1- 3 600 374
- US-A- 5 176 316
- US-A1- 2005 131 652
- US-B1- 6 377 181

## Beschreibung

Die Erfindung betrifft ein Verfahren zur Kontrolle des Feuchteaufnahme- und Feuchteabgabeverhaltens von Bauwerkselementen, insbesondere Wärmedämmungen, bei dem der Wasserdampfdruck an mindestens einem Messort innerhalb des Bauwerkselements und zusätzlich der Wasserdampfdruck an mindestens einem weiteren Messort außerhalb des Bauwerkselements ermittelt wird ermittelt wird, sowie ein entsprechendes Messsystem mit mindestens einer ersten Messeinrichtung zur Ermittlung des Wasserdampfdrucks innerhalb des Bauwerkselements und mindestens einer zweiten Messeinrichtung zur Ermittlung des Wasserdampfdrucks außerhalb des Bauwerkselements, wobei die Messeinrichtungen mit einer Rechnereinheit verbunden sind.

Messsysteme, welche die Feuchtigkeit innerhalb von Bauwerkselementen, beispielsweise Flachdächern, überwachen und hierdurch Rückschlüsse auf Leckagen oder vergleichbare bauliche Mängel der überwachten Bauwerkselemente geben sollen, sind seit längerem bekannt.

So beschreibt die DE 36 00 374 A1 eine Vorrichtung zur Früherkennung und Eingrenzung von Wasserschäden, hervorgerufen durch Kondensatbildung und Leckagen an einem Flachdach. Erfindungsgemäß wird vorgeschlagen, auf dem Flachdach über dessen Fläche verteilt im Abstand zueinander Wasser- und/oder Feuchtemeldesensoren stationär anzubringen, die durch die oberste Dachhaut dicht in die darunter liegende Dämmschicht eingebracht sind und gegebenenfalls auf einer weiter darunter liegenden wasserführenden Schicht, die üblicherweise durch eine Dampfsperrschicht gebildet wird, aufstehen. Ein Ansprechen der Sensoren gibt dabei Rückschlüsse auf sich dort bildende Wasserflächen oder einen Wasserlauf, wodurch eine Erkennung und Eingrenzung von baulichen Fehlern am Flachdach ermöglicht werden soll. Nachteilig hierbei ist jedoch, dass eine Vielzahl von Sensoren notwendig sind, die zudem lediglich anzeigen, dass sich bereits Wasser an der Dampfsperrschicht gebildet hat. Eine Früherkennung von baulichen Mängeln, die in einem unbefriedigendem Austrocknen der Dachfläche resultiert, wobei noch gar kein Wasser in flüssiger Form vorhanden sein muss, ist mit diesem System nicht möglich.

Die DE 36 36 074 A1 zeigt ein Kontroll- und Meldesystem zur Erkennung von eindringendem Wasser in Gebäuden, insbesondere für Flachdächer, wobei an dem zu überwachenden Gebäudebereich mindestens ein Feuchtigkeits-oder Wasserstandssensor in der Außenwandung vorgesehen ist. Dieser steht mit einem Kontrollgerät in Verbindung, das beim Ansprechen dieses Sensors ein optisches und/oder akustisches Meldesignal erzeugt. Auf diese Weise soll, insbesondere bei mehreren Sensoren, eine undichte Stelle rechtzeitig erkannt werden. Jedoch sind auch mit diesem System lediglich aktuelle Aussagen über das Vorhandensein von Feuchtigkeit oder flüssigem Wasser innerhalb des Gebäudes möglich. Genaue Angabe über das Feuchteaufnahme- und Feuchteabgabeverhaltens und somit auch das Trocknungsverhalten des Daches an sich lässt das System hingegen nicht zu.

Schließlich wird durch die US 2005/0131652 A1 vorgeschlagen, an verschiedenen Messstellen eines Bauwerks beispielsweise die Temperatur und/oder die Luftfeuchtigkeit zu ermitteln. Die jeweiligen Messwerte werden unmittelbar ausgewertet, wobei jedoch lediglich die Messwerte an verschiedenen Messorten miteinander verglichen werden. Steigt nun der Wert an einem Messort stärker an als an einem zweiten Messort, so wird dies als Indiz für ein unerwünschtes Ereignis im Bereich des Messorts 1 gewertet. Aussagen über das Feuchteaufnahme- und Feuchteabgabeverhalten eines Bauwerks sind hierdurch ebenfalls nur indirekt möglich.

Es ist daher Aufgabe der vorliegenden Erfindung, ein Verfahren und ein Messsystem vorzuschlagen, durch welches es in einfacher Weise möglich ist, zuverlässige Aussagen über das Feuchteaufnahme- und Feuchteabgabeverhaltens von Bauwerkselementen zu treffen.

Diese Aufgabe wird gelöst durch die Merkmale der unabhängigen Ansprüche.

Erfindungsgemäß wird vorgeschlagen, dass die Wasserdampfdrücke innerhalb und außerhalb des Bauwerkselements als Funktion der Zeit dahingehend überwacht werden, ob sich der Wasserdampfdruck innerhalb des Bauwerkselements mit einer definierten zeitlichen Verzögerung dem Wasserdampfdruck außerhalb des Bauwerkselements angleicht.

Bauwerkselemente im Sinne der Erfindung bestehen in der Regel aus einer Außenschicht, einer Innenschicht und einer dazwischenliegenden Dämmschicht. Bei den Bauwerkselementen kann es sich dabei um Dächer, insbesondere Flachdächer, aber auch um Wände, Decken, Beplankungen oder sonstige vergleichbare Elemente handeln. Die Schichtenfolge sollte üblicherweise diffusionsoffen ausgebildet sein, um ein Verdunsten von Wasser, das in die Dämmschicht eingetreten ist, nach beiden Seiten zu ermöglichen. Ist dies nicht der Fall, kann es durch angesammeltes gasförmiges und/oder flüssiges Wasser zu einer Beschädigung der Dämmschicht kommen.

Die Erfindung geht von der Tatsache aus, dass sich der Gesamtluftdruck und somit auch der Wasserdampfdruck zwischen Innen- und Außenseite des Schichtenpaketes als Funktion der Zeit immer wieder anzugleichen versucht. Weist das Bauwerkselement jedoch einen baulichen Mangel auf, der im Eintreten von flüssigem Wasser und/oder in einer unzureichenden Austrocknung der Dämmschicht resultiert, so kann sich der Wasserdampfdruck innerhalb und außerhalb des Bauwerkselements nicht mehr oder nur innerhalb eines sehr langen Zeitraums angleichen. Dies führt jedoch über kurz oder lang zu einer Beschädigung der Dämmschicht.

Gemäß der Erfindung werden die Wasserdampfdrücke innerhalb und außerhalb eines Bauwerkselements als Funktion der Zeit überwacht. Der Verlauf der beiden Kurven sollte dabei vergleichbar sein, da sich der Wasserdampfdruck innerhalb des Bauwerkselements, wie oben erwähnt, ständig dem Wasserdampfdruck außerhalb des Bauwerkelements angleicht. Da dieser Angleich aus diffusionstechnischen Gründen jedoch immer etwas zeitversetzt erfolgt, sind beide Kurven zeitlich leicht verschoben. Somit sollte im Normalfall der Wasserdampfdruck im Inneren des Bauwerkselements einen Wert annehmen, der dem Wasserdampfdruck außerhalb des Bauwerkselements zu einem früheren Zeitpunkt entspricht. Durch Verschieben einer der Kurven ließen sich folglich beide Verläufe zur Deckung bringen. Aus dem Verhältnis bzw. der Differenz beider Wasserdampfdrücke können daher anschließend in einfacher Weise Rückschlüsse auf die Diffusionseigenschaften des Bauwerkselements und somit auf dessen Feuchteaufnahme- und Feuchteabgabeverhalten gezogen werden. So wird bei ordnungsgemäßem Zustand des Bauwerkselements der Wasserdampfdruck innerhalb des Bauwerkselements mit zeitlicher Verzögerung kontinuierlich dem Verlauf des Wasserdampfdrucks außerhalb des Bauwerkselements folgen. Ist dies nicht der Fall, so deutet dies auf einen baulichen Mangel des Bauwerkselements. Somit lassen sich durch das erfindungsgemäße Verfahren zum einen Bauwerkselemente prophylaktisch überprüfen, indem regelmäßig Messwerte ermittelt und ausgewertet werden. Hierdurch können eventuelle bauliche Mängel frühzeitig erkannt werden. Zum anderen ist es aber auch möglich, das Trocknungsverhalten eines Bauwerkselements nach der Behebung eines baulichen Mangels zu verfolgen, um hierdurch den Erfolg der Reparaturarbeiten zu kontrollieren.

Da sich der Wasserdampfdruck nicht direkt messen lässt, erfolgt die Ermittlung der Wasserdampfdrücke vorteilhafterweise durch Aufzeichnung physikalischer Messwerte, aus denen anschließend der Wasserdampfdruck berechnet werden kann.

Besonders vorteilhaft ist es hierfür, dass die Messwerte mittels jeweils mindestens einer Messeinrichtung, die jeweils mindestens ein Thermometer und ein Hygrometer umfasst, ermittelt werden. Werden an den einzelnen Messorten jeweils die Temperatur und die relative Luftfeuchtigkeit gemessen, so lassen sich aus den entsprechenden Messwertepaaren die Wasserdampfdrücke berechnen. Diese ergeben sich aus dem Produkt der relativen Luftfeuchte und dem Sättigungsdampfdruck für Wasser, welcher wiederum für jede Temperatur einen bestimmten Betrag aufweist. Da sich der Wasserdampfdruck innerhalb des Bauwerkselements ausgleicht, ist es theoretisch ausreichend, wenn innerhalb und außerhalb des Bauwerkselementes jeweils nur an einem Messort Temperatur und relative Luftfeuchtigkeit gemessen werden. Natürlich können auch mehrere Messeinrichtungen über die Innenfläche des Bauwerkselements verteilt werden, um durch den Vergleich der Messwerte die mangelhafte Stelle räumlich eingrenzen zu können. Auf der Außenseite des Bauwerkselemente ist in der Regel eine Messeinrichtung zur Messung von Temperatur und relativer Luftfeuchtigkeit ausreichend, da dieses üblicherweise auf der Außenseite des Bauwerkes angebracht werden wird und der Wasserdampfdruck hier über einen weiten Bereich nahezu konstant ist.

Besonders vorteilhaft ist es zudem, wenn die Messwerte an eine zentrale Rechnereinheit übermittelt werden. Auf diese Weise können die Messwerte zentral gespeichert und ausgewertet werden.

Um die Messeinrichtungen mit der Rechnereinheit zu verbinden, ist es vorteilhaft, wenn die Übermittlung mittels Kabelverbindung und/oder Funkverbindung erfolgt. Die Übermittlung mittels Funkverbindung weist dabei den Vorteil auf, dass auf das Verlegen von Kabeln verzichtet werden kann, so dass auch vorhandene Bauwerke in einfacher Weise nachträglich mit den entsprechenden Messeinrichtungen ausgerüstet werden können.

Besonders bei einer nachträglichen Anbringung der Messeinrichtungen in bzw. an ein bestehendes Bauwerk ist es von Vorteil, wenn die Messeinrichtungen über eine autonome Energieversorgung verfügen. Hierdurch entfallen zusätzliche Kabelverbindungen, und ein Einbau der Messeinrichtungen ist schnell und kostengünstig durchführbar. Je nach Bedarf kann die Energieversorgung dabei entweder mit mehreren oder allen Messeinrichtungen verbunden werden. Auch die Ausstattung einer jeden Messeinrichtung mit einer eigenen Energieversorgung ist denkbar, wodurch eine besonders kompakte Bauweise ohne großen Verkabelungsaufwand entsteht.

In einer besonders vorteilhaften Ausgestaltung der Erfindung erfolgt die Energieversorgung über Fotovoltaikelemente und/oder Batterien, insbesondere Akkumulatoren. Da die Messeinrichtungen einen relativ geringen Energieverbrauch aufweisen, können kleine Fotovoltaikelemente zum Einsatz kommen, die an der Außenseite des Bauwerkes installiert werden können. Um eine lückenlose Aufzeichnung der Messwerte sicher zu stellen, können die Messeinrichtungen alternativ oder zusätzlich mit Batterien, insbesondere Akkumulatoren, die beispielsweise über die Fotovoltaikelemente aufgeladen werden können, verbunden werden. Auch hier ist eine zentrale Versorgung mehrerer oder aller Messeinrichtungen mit einer Energieversorgung oder die Ausrüstung einzelner Messeinrichtungen über Fotovoltaikelementen und/oder Batterien denkbar.

Werden die Messwerte über einen bestimmten Zeitraum gespeichert, so können diese auch zu einem späteren Zeitpunkt erneut aufgerufen und analysiert werden.

Vorteilhafterweise werden den gespeicherten Messwerten aller oder einzelner Messeinrichtungen jeweils Datum, und vorzugsweise auch die Uhrzeit, der Messung zugeordnet. Dies erlaubt besonders detaillierte Aussagen über das Feuchteaufnahme- und Feuchteabgabeverhalten der Bauwerkselemente, da in einfacher Weise verfolgt werden kann, ob und in welchem Maße der Wasserdampfdruck innerhalb des Bauwerkselements, natürlich mit einem gewissen zeitlichen Abstand, dem Wasserdampfdruck außerhalb des Bauwerkselements folgt. Auch können hierdurch zu einem späteren Zeitpunkt rückwirkende Analysen, beispielsweise auf Basis zusätzlicher Berechnungen, durchgeführt werden oder jahrgangsbedingte Schwankungen zuverlässiger erkannt und bewertet werden. Um den Speicherbedarf gering zu halten, ist es bei der Verwendung mehrerer Messeinrichtungen innerhalb des Bauwerkselements beispielsweise möglich, Mittelwerte zu bilden und nur diesen genaue Messzeitpunkte zuzuweisen.

Werden die Messwerte und/oder die berechneten Wasserdampfdrücke graphisch ausgegeben, so ist eine besonders einfache Interpretation der Daten möglich. Befindet sich der bauliche Zustand des Bauwerkselements in einem aus diffusionstechnischer Sicht einwandfreien Zustand, so ist eine Korrelation der Wasserdampfdrücke innerhalb und außerhalb des Bauwerkselements über einen Zeitraum von beispielsweise Wochen oder wenigen Monaten erkennbar. Die Differenz beider Wasserdampfdrücke sollte dabei einen Betrag von nahezu 0 annehmen, was einem Verhältnis beider Werte von ungefähr 1 entspräche. Zwar ist eine geringe, physikalisch bedingte Abweichung von diesen Werten in den meisten Fällen zu beobachten, da in Abhängigkeit des Bauwerkselements stets eine gewisse Zeitspanne vergeht, bis sich der Wasserdampfdruck, bedingt durch Diffusion, dem Wasserdampfdruck außerhalb des Bauwerkselements angleichen kann. Weichen die ermittelten Differenzen bzw. Verhältnisse jedoch zu stark von den genannten Werten ab, kann dies ein Indiz dafür sein, dass das Diffusionsverhalten des Bauwerkselements mangelhaft ist.

Zusätzlich oder alternativ ist es auch von Vorteil, wenn das Verhältnis der Wasserdampfdrücke an beiden Messorten mit einem Sollwert, der abhängig vom entsprechenden Bauwerkselement ist, verglichen wird und bei einer definierten Abweichung von diesem Sollwert ein Signal durch einen Signalgeber ausgegeben wird. Durch ein derartiges Signal, beispielsweise in optischer und/oder akustischer Form, entfällt in vorteilhafter Weise eine ständige Kontrolle der Messwerte durch den Betreiber.

Besonders vorteilhaft ist es, wenn der Signalgeber und/oder die Recheneinheit über Mobilfunktechnik und/oder eine Internetverbindung mit einem Empfänger verbunden werden kann. Hierdurch kann der Betreiber unabhängig von seinem eigenen Standort durch ein oben genanntes Signal über Baumängel benachrichtigt werden. Auch ein Zugreifen auf die jeweiligen Messwerte ist jederzeit möglich, wodurch eine besonders zuverlässige Kontrolle des Bauwerkselements ermöglicht wird.

In vorteilhafter Weise können auch bereits bestehende Bauwerke überprüft werden, wenn die Messeinrichtungen nachträglich an dem Bauwerkselement angebracht werden. Hierdurch ist es zum einen möglich, das Feuchteaufnahme- und Feuchteabgabeverhalten verschiedenster Bauwerkselemente zu überprüfen. Zum anderen können die Messeinrichtungen auch lediglich während der Trockenlegung eines Bauwerkselements, beispielsweise nach einem Wasserschaden, an bzw. in dem entsprechenden Bauwerkselement installiert werden, um den Fortschritt des Trocknungsvorgangs zu überprüfen.

Das vorgeschlagene Messsystem zur Kontrolle der Wasserdichtigkeit von Bauwerkselementen, insbesondere Wärmedämmungen, weist neben einer ersten Messeinrichtung zur Ermittlung des Wasserdampfdrucks innerhalb des Bauwerkselements eine zweite Messeinrichtung zur Ermittlung des Wasserdampfdrucks außerhalb des Bauwerkselements auf, wobei die Messeinrichtungen mit einer Rechnereinheit verbunden sind. Erfindungsgemäß wird vorgeschlagen, dass die Rechnereinheit die Messwerte als Funktion der Zeit dahingehend auswertet, ob sich der Wasserdampfdruck innerhalb des Bauwerkselements mit einer definierten zeitlichen Verzögerung dem Wasserdampfdruck außerhalb des Bauwerkselements angleicht. Hierdurch wird ein System geschaffen, dass die Durchführung des oben beschriebenen Verfahrens ermöglicht und somit die Kontrolle der Feuchteaufnahme- und Feuchteabgabeverhaltens eines Bauwerkselements mit einfachen Mitteln erlaubt.

In vorteilhafter Weise umfasst die Messeinrichtung ein Thermometer und ein Hygrometer. Mit Hilfe dieser Messeinrichtungen, die sich jeweils innerhalb und außerhalb des Bauwerkselements befinden, werden Temperatur und relative Luftfeuchtigkeit ermittelt, um daraus die entsprechenden Wasserdampfdrücke zu berechnen. Die mathematische Auswertung der Messwerte erfolgt dabei in der Rechnereinheit, die den Messeinrichtungen zugeordnet ist. Je nach Anforderung an das Messsystem ist es hierbei möglich, jeweils eine Messeinrichtung, bestehend aus Thermometer und Hygrometer, innerhalb und außerhalb des Bauwerkselements anzuordnen, oder mehrere Messeinrichtungen innerhalb und/oder außerhalb des Bauwerkselementes zu installieren. Bei der Anordnung mehrerer Messeinrichtungen ergibt sich der Vorteil, dass eine fehlerhafte Stelle des Bauwerkselements, die in einer mangelhaften Austrocknung desselben resultiert, räumlich genauer eingegrenzt werden kann. Auch bei großen zu überwachenden Flächen ist der Einsatz von mehreren Messeinrichtungen vorteilhaft.

Die Verbindung zwischen Messeinrichtung und zentraler Rechnereinheit erfolgt vorteilhafterweise mittels Kabelverbindung und/oder Funkverbindung. Unter den Begriff Funkverbindung fällt im Rahmen dieser Erfindung ausdrücklich auch die Integration der Messeinrichtungen und/oder der Rechnereinheit in ein, eventuell schon bestehendes, Funknetzwerk (WLAN). Hierdurch können die Messwerte schnell und komfortabel zwischen Messeinrichtung, Rechnereinheit und ggf. weiteren Computern, beispielsweise einem Laptop, ausgetauscht und somit vom Betreiber eingesehen werden.

Vorteilhaft ist zudem, wenn den Messeinrichtungen eine autonome Energieversorgung zugeordnet ist. Hierdurch ist das Messsystem unabhängig von zusätzlichen Energiekreisläufen und kann somit an beliebigen Stellen in bzw. am Bauwerkselement installiert werden. Die Energieversorgung kann dabei für mehrere oder alle Messeinrichtungen aber auch für jeweils einzelne Messeinrichtungen unabhängig eingerichtet werden. Selbstverständlich kann die Energieversorgung der Messeinrichtungen auch über die Verbindung mit der Rechnereinheit, beispielsweise mittels USB-Verbindung, erfolgen.

Besonders vorteilhaft ist es auch, wenn die Energieversorgung durch mindestens ein Fotovoltaikelement und/oder mindestens eine Batterie, insbesondere einen Akkumulator, realisiert ist. Hierdurch kann eine Energieversorgung ohne großen Verkabelungsaufwand geschaffen werden, indem jeder Messeinrichtung eine eigene Energieversorgung erhält. Fotovoltaikelemente und Batterien können dabei im Kombination oder auch einzeln zum Einsatz kommen.

Vorteilhaft ist zudem, wenn die Messeinrichtung, die der Ermittlung des Wasserdampfdrucks außerhalb des Bauwerkselements dient, im Außenbereich des Bauwerks, in dem sich das Bauwerkselement befindet, angeordnet ist. Hierdurch kann besonders genau verfolgt werden, ob der Wasserdampfdruck innerhalb des Bauwerkselements dem Wasserdampfdruck, der in der Umgebung des Bauwerks herrscht, folgt. Besonders bei Bauwerkselementen in Form von Dächern oder Hausaußenwänden sollte dies bei einem funktionierendem Wärmedämmsystem der Fall sein, da hier besonders die Wasserdampfdiffusion vom Inneren des Bauwerkselements in Richtung des Außenbereichs des Bauwerks für eine Trocknung des Bauwerkselements verantwortlich ist.

In vorteilhafter Ausgestaltung des Messsystems ist der Vorrichtung ein Signalgeber zugeordnet. Dieser macht den Betreiber darauf aufmerksam, wenn sich das Verhältnis und/oder die Differenz der Wasserdampfdrücke innerhalb und außerhalb des Bauwerkselements außerhalb bestimmter Grenzen bewegt und somit Rückschlüsse auf einen baulichen Mangel des Bauwerkselements bezüglich seiner Wasserdampf-Diffusionseigenschaften erlaubt. Der Signalgeber kann dabei optische und/oder akustische Signale ausgeben, wobei der Signalgeber selbst an einer beliebigen Stelle, beispielsweise an einer Bauwerkswand, angeordnet sein kann.

Besondere Vorteile bringt es mit sich, wenn der Signalgeber und/oder die Rechnereinheit über Mobilfunktechnik oder eine Internetverbindung mit einem Empfänger verbindbar ist. Hierdurch kann der Betreiber des Messsystems jederzeit und nahezu an jedem beliebigen Ort über das Überschreiten vorgegebener Höchstgrenzen des Verhältnisses der gemessenen Wasserdampfdrücke, beispielsweise über eine von der Rechnereinheit generierte E-mail oder eine Kurzmitteilung (SMS), informiert werden oder aber auch jederzeit auf die gemessenen Messwerte zugreifen und diese analysieren.

Soll das Messsystem nachträglich in ein bestehendes Bauwerkselement integriert werden, so bietet es Vorteile, wenn die mindestens eine Messeinrichtung, die sich innerhalb des Bauwerkselements befindet, nachträglich durch eine Öffnung in das Baüwerkselement eingebracht wird, die nach außen hin verschließbar ist. Hierbei ist zu beachten, dass die Messeinrichtung an einer repräsentativen Stelle innerhalb des Bauwerkselements, beispielsweise im Bereich der Luftporen der Dämmschicht, angebracht wird. Selbstverständlich bietet sich eine derartige Öffnung, in der sich die Messeinrichtung befindet, auch dann an, wenn die Messeinrichtung bereits während des Baus des Bauwerkselements in dieses integriert wird, so dass die Messeinrichtung jederzeit austauschbar ist.

Im folgenden wird die Erfindung anhand von Figuren erläutert. Es zeigen:
- **Figur 1**: einen schematischen Querschnitt eines Schrägdaches mit entsprechenden Messeinrichtungen, und
- **Figur 2**: eine schematische Darstellung des erfindungsgemäßen Verfahrens.

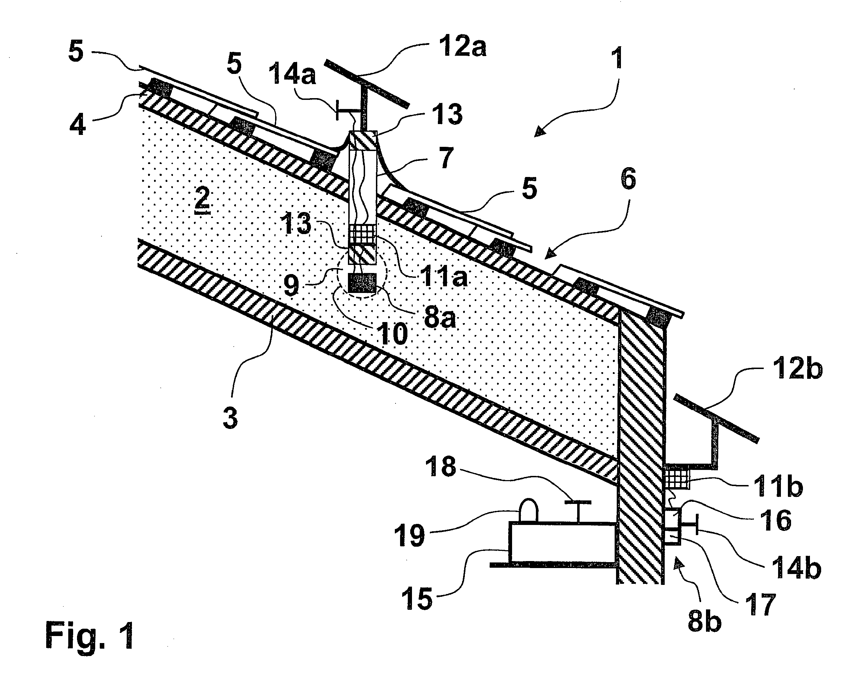

Figur 1 zeigt einen schematischen Querschnitt eines Bauwerkselements 1 in Form eines Schrägdaches. Dieses weist vereinfacht dargestellt eine Dämmschicht 2, eine zur Innenseite hin gerichtete Dampfsperrschicht 3 und eine nach außen hin gerichtete Außenschicht 4 mit einer darauf befindlichen Dachabdeckung in Form von Dachziegeln 5 auf. Zusätzlich können selbstverständlich weitere Zwischenschichten oder auch Zwischenhohlräume bestehen, die der Einfachheit halber nicht dargestellt sind.

Sowohl die Dampfsperrschicht 3 als auch die Außenschicht 4 erlauben im Normalzustand ein Verdunsten von in die Dämmschicht 2 eingedrungenem Wasser durch Diffusionsvorgänge. Wie auch der Gesamtluftdruck gleicht sich mit der Zeit der Wasserdampfdruck zwischen Innenseite und Außenseite des Bauwerkselements 1 je nach Witterungsbedingungen immer wieder annähernd aus.

Weist das Dach jedoch, beispielsweise durch eine beschädigte Dachziegel 5, eine Leckage 6 auf, so dringt Wasser in die Dämmschicht 2 ein. Durch Verdunstung entsteht ein erhöhter Wasserdampfdruck im Inneren des Bauwerkselements 1, der durch das ständige Eindringen von neuem Wasser durch die Leckage 6 nicht mehr auf den Wasserdampfdruck außerhalb des Bauwerkselements 1 absinken kann. Ein ähnlicher Effekt wäre zu beobachten, wenn die Diffusion von Wasserdampf von der Dämmschicht 2 durch eine der angrenzenden Schichten, beispielsweise bedingt durch bauliche Mängel, behindert wäre. Eine einmalig eingetretene Wassermenge könnte folglich durch Diffusion die Dämmschicht 2 nicht in ausreichendem Maße verlassen, und es käme unweigerlich zu einer Beschädigung der Dämmschicht 2.

Die beschriebene Tatsache, dass sich der Wasserdampfdruck im Inneren des Bauwerkselements 1, selbstverständlich mit einem gewissen zeitlichen Versatz, immer an den Wasserdampfdruck außerhalb des Bauwerkselements 1 angleicht, wird durch das erfindungsgemäße Verfahren genutzt, um das Feuchteaufnahme- und Feuchteabgabeverhalten des Bauwerkselements 1 zu überprüfen.

Hierfür weist das Bauwerkselement 1 eine Öffnung, im gezeigten Fall in Form eines Rohres 7, auf, welche schon während des Baus des Bauwerkselements 1 oder aber auch nachträglich in dieses integriert werden kann. In diese Öffnung wird eine erste Messeinrichtung 8a, welcher der Messung von Temperatur und relativer Luftfeuchtigkeit dient, ins Innere des Bauwerkselements 1 eingebracht. Natürlich können auch mehrere Messeinrichtungen 8a, welche die genannten Messwerte getrennt voneinander registrieren, zum Einsatz kommen. Die Messeinrichtung 8a selbst befindet sich schließlich in einem Hohlraum 9, dessen Außenbegrenzung 10 einen Stoffaustausch mit der Innenseite des Bauwerkselements 1 erlaubt. Mit der Messeinrichtung 8a ist wiederum ein Akkumulator 11a verbunden, der von einem Fotovoltaikelement 12a ganz oder teilweise gespeist wird. Somit erhält die Messeinrichtung 8a eine autonome Energieversorgung. An beiden Enden ist das Rohr 7 mit einem Stopfen 13 verschlossen. Hierdurch wird sichergestellt, dass sowohl die Messeinrichtung 8a als auch der Akkumulator 11a vor äußeren Einwirkungen geschützt ist und dass die Messeinrichtung 8a exakt die Temperatur und die relative Luftfeuchtigkeit misst, die im Inneren des Bauwerkselements 1 herrschen. Zusätzlich ist der Messeinrichtung 8a ein Funksender 14a zugeordnet, der die gemessenen Signale an eine Rechnereinheit 15 weiterleitet.

Außerhalb des Bauwerkselements 1, in der Regel auch außerhalb des Bauwerkes selbst, befindet sich eine zweite Messeinrichtung 8b, bestehend aus Thermometer 16 und Hygrometer 17, welche die Temperatur und die relative Luftfeuchtigkeit außerhalb des Bauwerkselements 1 registrieren. Auch diese Messeinrichtung 8b ist mit einer Energieversorgung, im gezeigten Fall ebenfalls mit einem Akkumulator 11 b und einem Fotovoltaikelement 12b, verbunden. Zudem ist der Messeinrichtung 8b ein Funksender 14b zugeordnet, der die gemessenen Messwerte an die Rechnereinheit 15 weiterleitet, die hierfür über einen Funkempfänger 18 verfügt.

Die Messwerte beider Messeinrichtungen 8 werden von der Rechnereinheit 15 erfasst und aus den Messwerten die Wasserdampfdrücke innerhalb und außerhalb des Bauwerkselements 1 berechnet. Aus dem zeitlichen Verlauf der Wasserdampfdrücke können schließlich Rückschlüsse auf das Feuchteaufnahme- und Feuchteabgabeverhalten des Bauwerkselements 1, insbesondere der Dämmschicht 2, gezogen werden.

Im Normalfall sollte der Wasserdampfdruck im Inneren des Bauwerkselements 1, wie oben ausgeführt, mit einem gewissen zeitlichen Versatz dem Wasserdampfdruck außerhalb des Bauwerkselements 1 folgen bzw. sich diesem annähern. Somit ergäbe sich - rechnet man den zeitlichen Versatz heraus - für die Differenz beider Werte ein Betrag von annähernd 0, bzw. ein Verhältnis von annähernd 1.

Weist das Bauwerkselement 1 jedoch eine Leckage 6 auf, oder ist die Diffusion von sich im Inneren des Bauwerkselements 1 befindlichen Wassers nach außen hin behindert, so erhält man im Inneren des Bauwerkselements 1 stets Wasserdampfdrücke, die eine signifikante Abweichung vom entsprechenden Wasserdampfdruck außerhalb des Bauwerkelements 1 annehmen. Überschreitet diese Abweichung einen vorgegebenen Betrag, der auf einen baulichen Mangel des Bauwerkelements 1 schließen lässt, so wird von der Rechnereinheit 15 ein Signal über einen Signalgeber 19 ausgegeben. Alternativ oder zusätzlich kann ein derartiges Signal oder aber können auch sämtliche aufgezeichneten und abgespeicherten Messwerte über eine nicht dargestellte Verbindung mittels Mobilfunktechnik oder Internetverbindung an den Betreiber des Systems weitergeleitet werden. Hierdurch wird eine zuverlässige und ortsunabhängige Kontrolle des Zustandes des Bauwerkselements 1 ermöglicht.

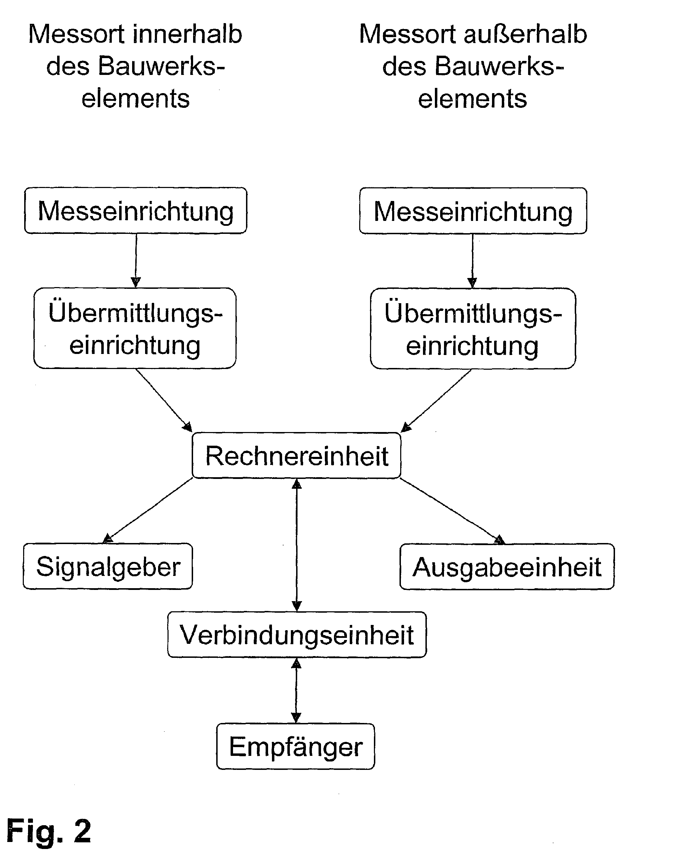

Figur 2 zeigt eine schematische Darstellung des erfindungsgemäßen Verfahrens. Um das Verhältnis der Wasserdampfdrücke innerhalb und außerhalb eines Bauwerkselements 1 zu ermitteln, werden an den entsprechenden Messorten innerhalb und außerhalb des Bauwerkselements mittels Messeinrichtungen 8 die jeweilige Temperatur sowie die relative Luftfeuchtigkeit registriert. Diese Werte werden mittels Übermittlungseinrichtung, beispielsweise in Form von Kabelverbindungen oder einer Funkverbindung, an eine Rechnereinheit 15 übermittelt. Hier werden die ermittelten Messwerte verarbeitet, wobei die Wasserdampfdrücke an den Messorten als Funktion der Zeit berechnet werden.

Überschreitet das Verhältnis von Wasserdampfdruck innerhalb des Bauwerkselements 1 zum Wasserdampfdruck außerhalb des Bauwerkselements 1 einen vorgegebenen Grenzwert, so gibt die Rechnereinheit 15 ein Signal an einen Signalgeber, wodurch der Betreiber des Systems informiert wird. Gleichzeitig oder alternativ kann ein entsprechendes Signal über eine Verbindungseinheit mittels Mobilfunktechnologie und/oder eine Internetverbindung an den Betreiber versandt werden. Ebenso erhält der Betreiber über eine derartige Verbindungseinheit auch die Möglichkeit, die gemessenen Messwerte bzw. die berechneten Wasserdampfdrücke ortsunabhängig abzurufen. Hierdurch wird eine einfache Möglichkeit eröffnet, den Zustand eines Bauwerkselements 1 bezüglich seines Feuchtigkeitszustandes zu überwachen, wodurch Schäden, insbesondere an der Dämmschicht 2, wirkungsvoll vermieden werden können.

Die vorliegende Erfindung wurde anhand von Ausführungsbeispielen näher erläutert. Abwandlungen der Erfindung sind im Rahmen der Patentansprüche ohne weiteres möglich, wobei ausdrücklich sämtliche in der Beschreibung und den Figurenbeschreibungen aufgeführten Merkmale in beliebiger Kombination miteinander verwirklicht werden können, soweit dies sinnvoll und möglich erscheint.

## Patentansprüche

1. Verfahren zur Kontrolle des Feuchteaufnahme- und Feuchteabgabeverhaltens von Bauwerkselementen (1), insbesondere Wärmedämmungen, bei dem der Wasserdampfdruck an mindestens einem Messort innerhalb des Bauwerkselements (1) und zusätzlich der Wasserdampfdruck an mindestens einem weiteren Messort außerhalb des Bauwerkselements (1) ermittelt wird, **dadurch gekennzeichnet, dass** die Wasserdampfdrücke innerhalb und außerhalb des Bauwerkselements (1) als Funktion der Zeit dahingehend überwacht werden, ob sich der Wasserdampfdruck innerhalb des Bauwerkselements (1) mit einer definierten zeitlichen Verzögerung dem Wasserdampfdruck außerhalb des Bauwerkselements (1) angleicht.

2. Verfahren nach Anspruch 1, **dadurch gekennzeichnet, dass** die Ermittlung der Wasserdampfdrücke durch Aufzeichnung physikalischer Messwerte erfolgt.

3. Verfahren nach Anspruch 2, **dadurch gekennzeichnet, dass** die Messwerte innerhalb und außerhalb des Bauwerkselements (1) mit jeweils mindestens einer Messeinrichtung (8a, 8b), die jeweils mindestens ein Thermometer (16) und ein Hygrometer (17) umfasst, ermittelt werden.

4. Verfahren nach dem vorhergehenden Anspruch, **dadurch gekennzeichnet, dass** mindestens eine der Messeinrichtungen (8a, 8b) über eine autonome Energieversorgung verfügt.

5. Verfahren nach einem der Ansprüche 3 oder 4, **dadurch gekennzeichnet, dass** die Messeinrichtungen (8a, 8b) nachträglich in bzw.
an dem Bauwerkselement (1) angebracht werden.

6. Verfahren nach einem der Ansprüche 3 bis 5, **dadurch**gekennzeichnet, dass die Messeinrichtung (8b), die der Ermittlung des Wasserdampfdrucks außerhalb des Bauwerkselements (1) dient, im Außenbereich des Bauwerks, in dem sich das Bauwerkselement (1) befindet, angeordnet wird.

7. Verfahren nach einem der vorhergehenden Ansprüche, **dadurch gekennzeichnet, dass** die Messwerte an eine zentrale Rechnereinheit (15) übermittelt werden.

8. Verfahren nach Anspruch 7, **dadurch gekennzeichnet, dass** die Übermittlung mittels Kabelverbindung und/oder Funkverbindung erfolgt.

9. Verfahren nach Anspruch 4, **dadurch gekennzeichnet, dass** die Energieversorgung über Fotovoltaikelemente (12) und/oder Batterien, insbesondere Akkumulatoren (11), erfolgt.

10. Verfahren nach einem der vorhergehenden Ansprüche, **dadurch gekennzeichnet, dass** die Messwerte über einen bestimmten Zeitraum gespeichert werden.

11. Verfahren nach Anspruch 10, **dadurch gekennzeichnet, dass** den gespeicherten Messwerten aller oder einzelner Messeinrichtungen (8a, 8b) jeweils Datum, und vorzugsweise auch die Uhrzeit, der Messung zugeordnet werden.

12. Verfahren nach einem der vorhergehenden Ansprüche, **dadurch gekennzeichnet, dass** die Messwerte und/oder die berechneten Wasserdampfdrücke graphisch ausgegeben werden.

13. Verfahren nach einem der vorhergehenden Ansprüche, **dadurch gekennzeichnet, dass** das Verhältnis der Wasserdampfdrücke an beiden Messorten mit einem Sollwert verglichen wird und bei einer definierten Abweichung vom Sollwert durch einen Signalgeber (19) ein Signal ausgegeben wird.

14. Verfahren nach Anspruch 13, **dadurch gekennzeichnet, dass** der Signalgeber (19) und/oder die Recheneinheit über Mobilfunktechnik und/oder eine Internetverbindung mit einem Empfänger verbunden werden kann wird.

15. Messsystem zur Kontrolle des Feuchteaufnahme- und Feuchteabgabeverhaltens von Bauwerkselementen (1), insbesondere Wärmedämmungen, mit mindestens einer ersten Messeinrichtung (8a) zur Ermittlung des Wasserdampfdrucks innerhalb des Bauwerkselements (1) und mindestens eine zweite Messeinrichtung (8b) zur Ermittlung des Wasserdampfdrucks außerhalb des Bauwerkselements (1), wobei die Messeinrichtungen (8a, 8b) mit einer Rechnereinheit (15) verbunden sind, **dadurch gekennzeichnet, dass** die Rechnereinheit (15) die Messwerte als Funktion der Zeit dahingehend auswertet, ob sich der Wasserdampfdruck innerhalb des Bauwerkselements (1) mit einer definierten zeitlichen Verzögerung dem Wasserdampfdruck außerhalb des Bauwerkselements (1) angleicht.

16. Messsystem nach Anspruch 15, **dadurch gekennzeichnet, dass** die Messeinrichtungen (8a, 8b) jeweils mindestens ein Thermometer (16) und ein Hygrometer (17) umfassen.

17. Messsystem nach einem der Ansprüche 15 oder 16, **dadurch gekennzeichnet, dass** die Verbindung mittels Kabelverbindung und/oder Funkverbindung realisiert ist.

18. Messsystem nach einem der Ansprüche 15 bis 17, **dadurch gekennzeichnet, dass** mindestens einer der Messeinrichtungen (8a, 8b) eine autonome Energieversorgung zugeordnet ist.

19. Messsystem nach Anspruch 18, **dadurch gekennzeichnet, dass** die Energieversorgung durch mindestens ein Fotovoltaikelement (12) und/oder mindestens eine Batterie, insbesondere einen Akkumulator (11), realisiert ist.

20. Messsystem nach einem der Ansprüche 15 bis 19, **dadurch gekennzeichnet, dass** die Messeinrichtung (8b), die der Ermittlung des Wasserdampfdrucks außerhalb des Bauwerkselements (1) dient, im Außenbereich des Bauwerks, in dem sich das Bauwerkselement (1) befindet, angeordnet ist.

21. Messsystem nach einem der Ansprüche 15 bis 20, **dadurch gekennzeichnet, dass** der Vorrichtung ein Signalgeber (19) zugeordnet ist.

22. Messsystem nach Anspruch 21, **dadurch gekennzeichnet, dass** der Signalgeber (19) und/oder die Rechnereinheit (15) über Mobilfunktechnik oder eine Internetverbindung mit einem Empfänger verbindbar ist.

## Claims

1. A method for monitoring the moisture absorption and discharge behavior of construction elements (1), particularly of thermal insulation elements, the water vapor pressure being measured at at least one measurement location inside of the construction element (1) and the water vapor pressure additionally being measured at at least one further measurement location outside of the construction element (1), **characterized in that** the water vapor pressures inside of and outside of the construction element (1) are monitored as a function of time so as to determine whether the water vapor pressure inside of the construction element (1) approaches the water vapor pressure outside of the construction element (1) with a defined time delay.

2. The method according to claim 1, **characterized in that** the water vapor pressures are determined by recording physical measured values.

3. The method according to claim 2, **characterized in that** the measured values inside of and outside of the construction element (1) are each determined by means of at least one measuring device (8a, 8b) comprising at least one thermometer (16) and one hygrometer (17).

4. The method according to the preceding claim, **characterized in that** at least one of the measuring devices (8a, 8b) has an autonomous power supply.

5. The method according to any one of the claims 3 or 4, **characterized in that** the measuring devices (8a, 8b) are installed in or on the construction element (1) after construction.

6. The method according to any one of the claims 3 through 5, **characterized in that** the measuring device (8b) for determining the water vapor pressure outside of the construction element (1) is disposed in the outer region of the building in which the construction element (1) is located.

7. The method according to any one of the preceding claims, **characterized in that** the measured values are transmitted to a central computer unit (15).

8. The method according to claim 7, **characterized in that** the transmission takes place by means of a cable connection and/or a radio connection.

9. The method according to claim 4, **characterized in that** the power is supplied by means of photovoltaic elements (12) and/or batteries, particularly rechargeable batteries (11).

10. The method according to any one of the preceding claims, **characterized in that** the measured values are saved for a particular period of time.

11. The method according to claim 10, **characterized in that** the date and preferably the time of day of the measurement are assigned to each saved measured value from all or from individual measuring devices (8a, 8b).

12. The method according to any one of the preceding claims, **characterized in that** the measured values and/or the calculated water vapor pressures are output graphically.

13. The method according to any one of the preceding claims, **characterized in that** the ratio of the water vapor pressures at the two measurement locations is compared with a target value and that in case of a defined deviation from the target value a signal is output by a signal generator (19).

14. The method according to claim 13, **characterized in that** the signal generator (19) and/or the computer unit can be connected to a receiver by means of cellular telephone technology and/or an internet connection.

15. A measurement system for monitoring the moisture absorption and moisture discharge behavior of construction elements (1), particularly of thermal insulation elements, having at least one first measuring device (8a) for determining the water vapor pressure inside of the construction element (1) and at least one second measuring device (8b) for determining the water vapor pressure outside of the construction element (1), the measuring devices (8a, 8b) being connected to a computer unit (15), **characterized in that** the computer unit (15) evaluates the measured values as a function of time in order to determine whether the water vapor pressure inside of the construction element (1) approaches the water vapor pressure outside of the construction element (1) with a defined time delay.

16. The measurement system according to claim 15, **characterized in that** the measuring devices (8a, 8b) each comprise at least one thermometer (16) and one hygrometer (17).

17. The measurement system according to any one of the claims 15 or 16, **characterized in that** the connection is implemented by means of a cable connection and/or a radio connection.

18. The measurement system according to any one of the claims 15 through 17, **characterized in that** at least one of the measuring devices (8a, 8b) is associated with an autonomous power supply.

19. The measurement system according to claim 18, **characterized in that** the power supply is implemented by means of at least one photovoltaic element (12) and/or at least one battery, particularly a rechargeable battery (11).

20. The measurement system according to any one of the claims 15 through 19, **characterized in that** the measuring device (8b) for determining the water vapor pressure outside of the construction element (1) is disposed in the outer region of the building in which the construction element (1) is located.

21. The measurement system according to any one of the claims 15 through 20, **characterized in that** a signal generator (19) is associated to the device.

22. The measurement system according to claim 21, **characterized in that** the signal generator (19) and/or the computer unit (15) can be connected to a receiver by means of cellular telephone technology or an Internet connection.

## Revendications

1. Procédé pour contrôler les propriétés d'absorption et de rejet d'humidité d'éléments d'ouvrage (1), en particulier d'éléments d'isolation thermique, dans lequel la pression de vapeur d'eau est déterminée à au moins un point de mesure au sein de l'élément d'ouvrage (1) et, de surcroît, la pression de vapeur d'eau est déterminée à au moins un point de mesure supplémentaire hors de l'élément d'ouvrage (1), **caractérisé en ce que** les pressions de vapeur d'eau au sein et en dehors de l'élément d'ouvrage (1) sont surveillées en tant que fonctions du temps pour déterminer si la pression de vapeur d'eau au sein de l'élément d'ouvrage (1) s'adapte avec un retard défini à la pression de vapeur d'eau en dehors de l'élément d'ouvrage (1).

2. Procédé selon la revendication 1, **caractérisé en ce que** la détermination des pressions de vapeur d'eau s'effectue par enregistrement de valeurs de mesure physiques.

3. Procédé selon la revendication 2, **caractérisé en ce que** les valeurs de mesure au sein et en dehors de l'élément d'ouvrage (1) sont respectivement déterminées à l'aide d'au moins un dispositif de mesure (8a, 8b), qui comporte respectivement au moins un thermomètre (16) et un hygromètre (17).

4. Procédé selon la revendication précédente, **caractérisé en ce que** l'un au moins des dispositifs de mesure (8a, 8b) dispose d'une alimentation électrique autonome.

5. Procédé selon l'une des revendications 3 ou 4, **caractérisé en ce que** les dispositifs de mesure (8a, 8b) sont montés ultérieurement dans ou sur l'élément d'ouvrage (1).

6. Procédé selon l'une des revendications 3 à 5, **caractérisé en ce que** le dispositif de mesure (8b), qui sert à déterminer la pression de vapeur d'eau en dehors de l'élément d'ouvrage (1), est disposé dans une zone extérieure de l'ouvrage dans lequel se trouve l'élément d'ouvrage (1).

7. Procédé selon l'une des revendications précédentes, **caractérisé en ce que** les valeurs de mesure sont transmises à une unité de calcul centrale (15).

8. Procédé selon la revendication 7, **caractérisé en ce que** la transmission s'effectue à l'aide d'une liaison câblée et/ou d'une liaison radioélectrique.

9. Procédé selon la revendication 4, **caractérisé en ce que** l'alimentation électrique est effectuée à l'aide d'éléments photovoltaïques (12) et/ou de piles, en particulier d'accumulateurs (11).

10. Procédé selon l'une des revendications précédentes, **caractérisé en ce que** les valeurs de mesure sont mémorisées pendant une période de temps déterminée.

11. Procédé selon la revendication 10, **caractérisé en ce que** la date, et de préférence également l'heure de la mesure, sont respectivement attribuées aux valeurs de mesure mémorisées de tous les dispositifs de mesure (8a, 8b) ou de dispositifs de mesure (8a, 8b) individuels.

12. Procédé selon l'une des revendications précédentes, **caractérisé en ce que** les valeurs de mesure et/ou les pressions de vapeur d'eau calculées sont présentées sous forme graphique.

13. Procédé selon l'une des revendications précédentes, **caractérisé en ce que** le rapport des pressions de vapeur d'eau aux deux points de mesure est comparé avec une valeur de consigne et un signal est émis par un générateur de signaux (19) en cas d'écart défini par rapport à la valeur de consigne.

14. Procédé selon la revendication 13, **caractérisé en ce que** le générateur de signaux (19) et/ou l'unité de calcul peut/peuvent être relié(s) avec un récepteur via une technologie de radiocommunication mobile et/ou une connexion Internet.

15. Système de mesure pour contrôler les propriétés d'absorption et de rejet d'humidité d'éléments d'ouvrage (1), en particulier d'éléments d'isolation thermique, avec au moins un premier dispositif de mesure (8a) pour déterminer la pression de vapeur d'eau au sein de l'élément d'ouvrage (1) et au moins un second dispositif de mesure (8b) pour déterminer la pression de vapeur d'eau hors de l'élément d'ouvrage (1), sachant que les dispositifs de mesure (8a, 8b) sont reliés avec une unité de calcul (15), **caractérisé en ce que** l'unité de calcul (15) analyse les valeurs de mesure en tant que fonctions du temps pour déterminer si la pression de vapeur d'eau au sein de l'élément d'ouvrage (1) s'adapte avec un retard défini à la pression de vapeur d'eau en dehors de l'élément d'ouvrage (1).

16. Système de mesure selon la revendication 15, **caractérisé en ce que** les dispositifs de mesure (8a, 8b) comportent respectivement au moins un thermomètre (16) et un hygromètre (17).

17. Système de mesure selon l'une des revendications 15 ou 16, **caractérisé en ce que** la liaison est réalisée à l'aide d'une liaison câblée et/ou d'une liaison radioélectrique.

18. Système de mesure selon l'une des revendications 15 à 17, **caractérisé en ce qu'**une alimentation électrique autonome est attribuée à au moins l'un des dispositifs de mesure (8a, 8b).

19. Système de mesure selon la revendication 18, **caractérisé en ce que** l'alimentation électrique est effectuée à l'aide d'au moins un élément photovoltaïque (12) et/ou d'au moins une pile, en particulier un accumulateur (11).

20. Système de mesure selon l'une des revendications 15 à 19, **caractérisé en ce que** le dispositif de mesure (8b), qui sert à déterminer la pression de vapeur d'eau en dehors de l'élément d'ouvrage (1), est disposé dans une zone extérieure de l'ouvrage dans lequel se trouve l'élément d'ouvrage (1).

21. Système de mesure selon l'une des revendications 15 à 20, **caractérisé en ce qu'**un générateur de signaux (19) est attribué au dispositif.

22. Système de mesure selon la revendication 21, **caractérisé en ce que** le générateur de signaux (19) et/ou l'unité de calcul (15) peut/peuvent être relié(s) avec un récepteur via une technologie de radiocommunication mobile et/ou une connexion Internet.
